# FASCICULE DE BREVET EUROPEEN

(11) **EP 0 540 436 B1**
(45) Date de publication et mention de la délivrance du brevet: **17.01.1996**
(21) Numéro de dépôt: 92420384.7
(22) Date de dépôt: 28.10.1992
(51) Int. Cl.: G21C 3/17

(54) **Eléments combustibles nucléaires comportant un piège à produits de fission à base d'oxyde**
Kernbrennstoffelement mit einem auf Oxid basierendem Spaltproduktabscheider
Nuclear fuel assemblies having an oxide-based fission product trap

(30) Priorité: 31.10.1991 FR 9113713
(43) Date de publication de la demande: 05.05.1993
(73) Titulaire: URANIUM PECHINEY, F-92400 Courbevoie Cédex 21 (FR)
(72) Inventeur: Bastide, Bernard, F-38500 La Buisse (FR); Morel, Bertrand, F-38340 Moirans (FR); Allibert, Michel, F-38100 Grenoble (FR)
(74) Mandataire: Vanlaer, Marcel

(56) Documents cités:
- DE-B- 1 464 636
- FR-A- 2 118 920
- FR-A- 2 142 030
- FR-A- 2 438 319
- US-A- 3 784 384
- DATABASE WPIL Section Ch, Week 8434, Derwent Publications Ltd., London, GB; Class C, AN 84-209610 (34) & JP-A-59 120 989
- DATABASE WPIL Section Ch, Week 8417, Derwent Publications Ltd., London, GB; Class C, AN 84-104195 (17) & JP-A-59 046 892

## Description

### DOMAINE TECHNIQUE

La présente invention concerne des éléments combustibles nucléaires, à base d'oxyde ou d'oxyde mixte uranifère fritté et comportant un piège ou capteur de produits de fissions à base de composés oxygénés métalliques. Un tel piège est surtout adapté aux produits de fission à longue durée de vie comme Cs, Sr ... générés en cours d'irradiation dans un réacteur nucléaire.

### ETAT DE LA TECHNIQUE

Les réacteurs du type PWR, BWR, à neutrons rapides, utilisant des pastilles combustibles à base d'oxyde fritté UO₂ ou d'oxydes mixtes génèrent "in situ" des produits de fissions dont certains sont non spécifiquement gazeux dans le coeur du réacteur. En fonctionnement normal, ces produits de fission solides restent généralement en place dans les pastilles, bien qu'il puisse se produire, pour certains d'entre eux, des migrations, dues aux écarts de température entre le coeur et la periphérie d'une pastille, vers l'extérieur de ladite pastille. Mais, même dans ce cas, la majeure partie d'entre eux reste confinée dans les pastilles combustibles.

Les produits de fissions apparaissent dans les pastilles sous forme élémentaire et peuvent former des composés, relativement stables à la température du coeur du réacteur (300-900°C), avec les oxydes combustibles constituant lesdites pastilles.

Cependant en cas d'accident majeur provoquant une élévation de température excessive du coeur d'un réacteur suivi d'un endommagement voire de la fusion dudit coeur, de tels composés sont insuffisamment stables et les produits de fission se voient alors libérés avec des risques importants de dissémination dans, et de contamination de, l'environnement; le risque est d'autant plus grand que ces produits de fission ont des durées de vie longues (quelques dizaines d'années). C'est le cas par exemple de Cs 137 et Sr 90.

Un dispositif permettant de piéger le césium, en fonctionnement normal, dans un réacteur à neutrons rapides a été proposé dans le brevet FR 2438319 (Westinghouse) ; il consiste à intercaler entre les pastilles combustibles'fissiles et fertiles des capteurs de Cs formés de pastilles, de faible densité et de forme particulière, constituées de TiO₂ ou Nb₂0₅. Ces oxydes fixent Cs à la température habituelle du coeur du réacteur et la forme des pastilles permet d'éviter toute contrainte, due à un gonflement apparaissant en cours de fonctionnement normal du réacteur, sur le gainage du combustible. Dans ce dispositif, il apparaît que le césium doit atteindre les pastilles de capteurs pour être piégé et que seul le Cs ayant suffisamment migré est effectivement piégé.

Par ailleurs en cas d'accident majeur un tel dispositif se révélerait insuffisamment efficace pour éviter toute dissémination du Cs; en effet tout le Cs, non encore piégé, présent dans les pastilles combustibles, pourrait s'échapper hors du gainage et contaminer l'environnement, la vitesse de piégeage n'étant pas assez rapide.

Le brevet FR 2142030 décrit des agents piégeant les produits de fission (Cs, Rb, I₂, Te) à base d'oxyde métallique comme SiO₂, TiO₂, leurs mélanges, mais aussi les silicates d'Al, les titanates des métaux des groupes II, III, IV ou de SiO₂ et CaO, lesdits agents étant incorporés au combustible comme additifs à une concentration située généralement entre 0,5 et 4% ou mieux entre 0,5 et 2%.

Bien que ces agents fixent les produits de fission dès leur apparition en cours d'irradiation, en donnant des composés par exemple du type silico-aluminate ou silico-titanate de Cs, ayant une stabilité souvent acceptable, par contre, la cinétique de décomposition du composé comportant le produit de fission est parfois trop élevée et la rétention des produits de fission insuffisante, par exemple en cas d'accident majeur se traduisant par une élévation anormale de température généralement aggravée par la présence d'une atmosphère réductrice.

C'est pourquoi la demanderesse a recherché un moyen de piéger les produits de fissions les plus dangereux, le plus possible dès leur apparition en cours d'irradiation, en particulier dans la masse des pastilles combustibles.

Mais elle a surtout recherché un piège de stabilité et efficacité améliorées pour que les produits de fission ne soient pas relargués à des températures élevées pouvant atteindre ou dépasser 1600°C ou mieux à des températures très élevées supérieures à 1800°C, voire en cas de fusion du coeur, quel que soit le type d'atmosphère présente.

Elle a également recherché un piège qui n'entraîne pas une fusion ou un début de fusion prématuré des pastilles combustibles en cas d'accident majeur, autrement dit un piège qui ne joue pas un rôle de fondant vis à vis des pastilles qui leur conserveront ainsi une réfractarité suffisante.

### DESCRIPTION DE L'INVENTION

L'invention concerne un élément combustible nucléaire capable de piéger les produits de fission apparaissant en cours d'irradiation en donnant un composé avec les produits de fission stable à plus de 1600°C, ledit élément combustible, comprenant des pastilles d'oxyde fritté uranifère entourées d'une gaine métallique, est caractérisé en ce que lesdites pastilles contiennent un agent piégeant lesdits produits de fission à base d'oxyde métallique mixte comprenant SiO₂ et l'un au moins des oxydes suivants ZrO₂ ou CeO₂.

Une deuxième variante de l'invention consiste à revêtir les pastilles d'oxyde fritté avec ledit agent piégeant.

Une troisième variante consiste à revêtir intérieurement la gaine avec ledit agent piégeant.

Les trois modes de réalisation peuvent être combinés pour améliorer les résultats; cependant il est préférable d'utiliser au moins le premier.

Les pastilles frittées concernées par l'invention sont généralement contenues dans une gaine métallique pour former un crayon combustible et conviennent à tous types de réacteur utilisant des céramiques combustibles. Elles contiennent au moins UO₂, éventuellement additionné d'autres matières combustibles comme PuO₂ (combustibles mixtes), ThO₂, ou d'autres éléments permettant d'agir sur la structure (par exemple densité, taille de grain...) de la pastille lors du frittage ou concernant la neutronique (présence d'agent neutrophage par exemple).

Les produits de fission sont piégés sous forme d'un composé chimique avec l'agent piégeant, ledit composé se formant in situ en cours d'irradiation.

Les agents piégeant utilisés sont généralement un mélange, ou de préférence un composé constitué, de deux au moins des oxydes suivants: Al₂O₃, CeO₂, Nb₂O₅, SiO₂, TiO₂, UO₂₊ₓ, V₂O₃, Y₂O₃, ZrO₂, et de préférence Al₂O₃, Nb₂O_{5,} SiO_{2,} TiO_{2,} UO_{2+x,} ZrO₂.

L'agent piégeant, qui peut être un simple mélange de ses constituants ou un composé déjà constitué, doit présenter les propriétés suivantes : être non volatil et inerte lors du frittage des pastilles combustibles, avoir une faible section de capture et donner un composé stable et non volatil avec le produit de fission à piéger, la cinétique de décomposition de ce composé stable devant être aussi faible que possible à des températures élevées 1600°C, ou mieux supérieures à 1800°C, quelle que soit l'atmosphère.

Cependant, de préférence à des couples d'oxydes de métaux tels que Al/Si (silico-aluminate) ou Al/Ti (titano-aluminate), la demanderesse a trouvé que les agents piégeants comportant SiO₂ et l'un au moins des oxydes ZrO₂, et CeO₂ donnaient des composés avec les produits de fission ayant une cinétique de décomposition, dans les conditions évoquées ci-dessus, très lente.

Il est avantageux, pour avoir une meilleure rétention du produit de fission, que l'agent piégeant soit introduit, dans l'élément combustible, en quantité telle que le composé formé soit en sous-stoéchiométrie quand l'élément combustible arrive en fin de vie, c'est-à-dire quand la quantité maximum de produit de fission a été générée.

Par exemple dans le cas du silico-zirconate, le rapport molaire Cs généré/Zr est avantageusement inférieur à 1 de sorte que l'on forme un composé dont la formule serait CsZrSi₃O_{8,5} au lieu du composé répertorié Cs₂ZrSi₃O₉.

Une telle caractéristique est particulièrement intéressante pour permettre à l'agent piégeant de jouer un rôle efficace jusqu'à ce que l'élément combustible ait atteint son taux de combustion maximum.

Il est également avantageux, pour des agents piégeants à base de SiO₂ et ZrO₂, que le rapport molaire Si/Zr soit compris entre 2 et 3 pour améliorer la rétention du produit de fission à haute température.

Pour obtenir ce rapport, on peut utiliser comme agent piégeant un mélange de SiO₂ et ZrO₂, mais de préférence un mélange du composé ZrSiO₄ et de SiO₂ de façon à éviter une interaction possible entre ZrO₂ et le combustible nucléaire.

Pour illustrer l'invention, on a formé un composé d'un agent piégeant avec un produit de fission (Cs) non radioactif et testé sa stabilité. Ainsi, dans des creusets en alumine, on a ajouté du carbonate de césium, à un mélange intime de deux oxydes ZrO₂ + SiO₂, également à un mélange intime du composé ZrSiO₄ broyé + SiO₂, dans ces deux cas le rapport molaire Si/Zr étant compris entre 2 et 3 et la granulométrie très fine, et au composé ZrSiO₄ broyé. Dans tous les cas, le rapport molaire Cs/Zr a été inférieur à 1.

A titre de comparaison, on a également préparé des creusets contenant du carbonate de césium et un seul oxyde (Al₂O₃, SiO₂, ZrO₂, TiO₂, Nb₂O₅, ZnO, CeO₂, Y₂O₃).

On a porté les creusets à 630°C sous air sec, plusieurs heures pour décomposer le carbonate, ce qui conduit à dégager CO₂, fondre l'oxyde de césium et obtenir un composé avec l'agent piégeant. Le mélange a été alors homogénéisé, on a fermé le creuset à l'aide d'un couvercle et on a porté l'ensemble à 750°C pendant 3 jours. Le produit a été alors homogénéisé puis porté à 900°C (pendant 5 h), 1200°C (pendant 5 h) et 1600°C (pendant plus de 5 h). Alors que dans le cas des oxydes simples (Al₂O₃, SiO₂, ZrO₂, TiO_{2,} Nb₂O₅, ZnO, CeO₂, Y₂O₃), on ne relève plus que des traces de césium après 1600°C, il est apparu qu'avec les mélanges d'oxydes, de ZrSiO₄ + SiO₂ et avec ZrSiO₄ la rétention de Cs se situe entre 80 et 87% quelle que soit l'atmosphère oxydante (air) ou réductrice (N₂ + H₂).

Par ailleurs, à 2000°C en atmosphère neutre, ces mêmes silico-zirconates selon l'invention retiennent plus de 40% du Cs piégé, alors que dans les mêmes conditions, un silico-aluminate (du type CsAlSiO₄ ou CsAlSi₂O₆, pollucite) en relargue plus de 80%.

Un autre essai comparatif a été réalisé : un agent piégeant du type titano-aluminate, donnant par exemple avec le Cs un composé du type Cs Al TiO₄, perd environ 80% de son Cs à des températures supérieures à 1600°C, et comme par ailleurs la section de capture de Ti est légèrement pénalisante, il n'est guère possible d'en augmenter la quantité pour piéger davantage de Cs.

Un autre essai comparatif a montré qu'avec des composés du type silico-aluminate de Cs, par exemple CsAlSiO₄, à une température d'environ 1600°C, la vitesse de relargage de Cs a été très élevée puisqu'après lh en atmosphère réductrice, la perte de Cs a été de 70% et il est à remarquer que ce type d'atmosphère est celui qui risque le plus de se former lors d'un accident majeur.

L'agent piégeant peut être ternaire ou mieux quaternaire.

Ainsi il peut être intéressant d'ajouter à l'agent piégeant de l'oxyde de TiO₂; ce dernier facilite en effet le piégeage des produits de fission (par exemple Cs) en améliorant la cristallisation du composé formé et donc sa stabilité. Il en est de même avec Nb₂O₅.

Par exemple, la substitution d'une partie (10-20 %) de ZrO₂ par TiO₂ dans le cas des agents piégeants de type silico-zirconate conduit à des composés (Cs - Zr - Ti - Si - O) présentant une meilleure cristallisation à plus faible température et par suite une meilleure rétention : on obtient ainsi, après maintient à 1600°C, un rapport molaire Cs/Zr généralement d'au moins 0,9. Par contre, la substitution d'une grande partie, voire de la totalité, de ZrO₂ par TiO₂ conduit à des composés silico-titanates de césium qui fondent à très basse température (inférieure à 1200°C) et qui ne présentent pas de rétention suffisante du césium à des températures supérieures à 1600° C.

Il peut être également intéressant, pour favoriser le piégeage par un effet de dilution, d'ajouter à l'agent piégeant au moins un composé oxygéné stable préférentiellement alcalin (par exemple Rb₂O, Na₂O, K₂O) ou encore alcalino-terreux (ou similaire) (par exemple CaO, BaO, SrO, MgO).

L'alcalin (ou l'alcalino-terreux) ajouté est en général différent du produit de fission à piéger. Par exemple, on peut doper l'agent piégeant du type silico-zirconate en ajoutant Rb sous forme d'un silico-zirconate de Rubidium. Cet agent piégeant réagira avec le césium pour former un composé Cs-Rb-Zr-Si-O qui sera quasi isomorphe du composé que l'on cherche à obtenir lors du piégeage de Cs l'aide par exemple d'un agent piégeant contenant uniquement un silico-zirconate : les réseaux des composés contenant Rb et Cs étant de structure voisine, on voit que Cs généré lors de la fission s'échangera sans difficulté avec Rb initialement présent dans le réseau.

L'ajout d'alcalin présente deux avantages :
i- cela permet de choisir un agent piégeant ayant une structure propre qui sera voisine de celle qu'il formera "in situ" lors du piégeage du produit de fission (Cs ou Sr)
   Ainsi, on est assuré que le composé final contenant le produit de fission piégé se formera, avec sa structure propre, voisine de celle de l'agent piégeant dopé, en minimisant les contraintes dimensionnelles pouvant apparaître au sein du combustible et en améliorant la stabilité finale.
ii-dans le cas où le rapport molaire césium sur autre alcalin, obtenu
   après piégeage, reste faible (par exemple inférieur à 0.2), l'activité chimique du césium se rapproche de celle de l'autre alcalin et il en résulte une plus grande stabilité, le césium étant en effet plus volatil que les autres alcalins.

Pour illustrer ces phénomènes, on a mélangé, en quantité équimolaire, un agent piégeant Rb ZrSi₃O_{8.5} avec de l'oxyde ou du chlorure de Cs. Après avoir porté ces mélanges à 700° C pendant 200 heures pour fixer le césium, les oxydes ou les chlorures non fixés ont été éliminés par chauffage à 1200°C pendant 1 h. Le dosage des alcalins montre que l'agent piégeant contient des quantités équimolaires de Cs et de Rb et donc qu'il a bien piégé Cs. L'agent piégeant dopé au Rb permet ainsi de former des composés stables Cs-Rb-Si-Zr-O par réaction et échange césium-rubidium avec les composés Rb-Si-Zr-O. On obtient des résultats équivalents avec le potassium mais la cinétique d'échange est plus lente.

Pour tester la stabilité desdits composés formés, on a porté des composés de formule Csₓ Rb₁₋ₓ ZrSi₃O_{8,5} à 1600°C pendant 5 heures et on a constaté que, pour x ≤ 0.2, la rétention du césium était améliorée par rapport à des composés sans Rb.

Quand l'agent piégeant est un composé constitué, il est généralement préparé, préalablement à son utilisation dans l'élément combustible, par tous moyens connus (par exemple fusion, frittage, coprécipitation et calcination, etc...).

Les mélanges d' oxydes ou les composés constitués servant d'agent piégeant sont en général mélangés, à l'état de poudre, à la poudre d'oxyde combustible avant pressage sous forme de pastille et frittage. En ce qui concerne les 2° et 3° variantes, ils peuvent être appliqués sur la surface de la pastille ou à l'intérieur de la gaine par tous moyens connus de l'homme de l'art, par exemple poteyage, projection à chaud, etc...

Quand on introduit l'agent piégeant dans la pastille, on veille à ce que sa dispersion dans le combustible soit très intime afin que les produits de fission puissent former le composé stable dès leur apparition en limitant ainsi leur migration. Pour cela, on introduit l'agent piégeant, dans la poudre d'oxyde combustible avant mise en forme et frittage, sous forme de poudre très fine.

La quantité d'agent piégeant utilisée est généralement comprise entre 0,3% et 5% (poids) rapporté au poids de combustible contenu dans l'élément combustible, et de préférence entre 0,5% et 2% par exemple pour les réacteurs PWR.

Dans toutes les variantes d'utilisation des agents piégeants, il va de soi que la quantité dudit agent piégeant utilisée est compatible avec les caractéristiques neutroniques que doit posséder l'élément combustible final.

Dans tous les cas, les produits de fission sont piégés en cours de fonctionnement normal du réacteur en formant, avec l'agent piégeant, des composés oxygénés stables à haute température (y compris en milieu fondu), plus ou moins complexes; en particulier ils donnent des raies, par examen aux rayons X, inconnues dans les répertoires, c'est le cas notamment du composé Cs Zr Si₃O_{8,5} plus haut.

Ainsi selon l'invention les produits de fission solides sont piégés sous forme d'un composé chimique formé in situ, stable à très haute température (supérieure à 1600°C, ou mieux supérieure à 1800°C, voire en milieu fondu) ayant une faible volatilité, compatible avec la neutronique du réacteur; de plus l'agent piégeant, est efficace pour piéger les produits de fission à la température de fonctionnement du réacteur, a une température de fusion compatible avec la température de frittage de la pastille combustible uranifère, est stable vis à vis du combustible uranifère, et ne présente qu'une faible variation dimensionnelle lors du piégeage.

## Revendications

1. Elément combustible nucléaire comprenant des pastilles frittées à base d'oxyde uranifère entourées d'une gaine métallique, un agent piégeant les produits de fission apparaissant en cours d'irradiation caractérisé en ce que l'agent piégeant est à base d'oxyde métallique mixte comprenant SiO₂ et l'un au moins des oxydes ZrO₂ ou CeO₂, donne un composé avec lesdits produits de fissions stable à plus de 1600° C et est contenu dans les pastilles.

2. Elément combustible nucléaire comprenant des pastilles frittées à base d'oxyde uranifère entourées d'une gaine métallique, un agent piégeant les produits de fission apparaissant en cours d'irradiation caractérisé en ce que l'agent piégeant est à base d'oxyde métallique mixte comprenant SiO₂ et l'un au moins des oxydes ZrO₂ ou CeO₂, donne un composé avec lesdits produits de fissions stable à plus de 1600° C et revêt les pastilles.

3. Elément combustible nucléaire comprenant des pastilles frittées à base d'oxyde uranifère entourées d'une gaine métallique, un agent piégeant les produits de fission apparaissant en cours d'irradiation caractérisé en ce que l'agent piégeant est à base d'oxyde métallique mixte comprenant SiO₂ et l'un au moins des oxydes ZiO₂ ou CeO₂, donne un composé avec lesdits produits de fissions stable à plus de 1600° C et revêt intérieurement la gaine.

4. Elément combustible selon l'une quelconque des revendications 1 à 3, caractérisé en ce que les oxydes sont utilisés sous forme de mélange ou de composé constitué.

5. Elément combustible selon l'une quelconque des revendications 1 à 4, caractérisé en ce que l'agent piégeant contient également TiO₂ ou Nb₂O₅.

6. Elément combustible selon l'une quelconque des revendications 1 à 5, caractérisé en ce que l'agent piégeant contient également au moins un composé oxygéné stable d'alcalin ou d'alcalino-terreux, y compris MgO.

7. Elément combustible selon l'une quelconque des revendications 1 à 6 caractérisé en ce que l'agent piégeant représente 0,3% à 5%, de préférence 0,5% à 1%, du poids de combustible.

8. Elément combustible selon l'une quelconque des revendications 1 à 7, caractérisé en ce que le rapport molaire Si/Zr dans l'agent piégeant est compris entre 2 et 3.

9. Elément combustible selon l'une quelconque des revendications 1 à 8 caractérisé en ce que dans le cas du piégeage de Cs par un silico-zirconate le rapport molaire Cs/Zr est inférieur à 1.

10. Elément combustible selon l'une quelconque des revendications 1, 4 à 9 caractérisé en ce que l'agent piégeant et ses éventuels additifs sont ajoutés sous forme de poudre très fine à la poudre d'oxyde combustible pour obtenir un mélange très intime qui est ensuite mis en forme et fritté pour obtenir la pastille combustible.

11. Elément combustible selon la revendication 10, caractérisé en ce que l'agent piégeant comporte plusieurs constituants qui sont fondus, homogénéisés, solidifiés, réduits à l'état de poudre très fine, puis mélangée à la poudre d'oxyde combustible avant mise en forme et frittage pour obtenir la pastille combustible.

## Patentansprüche

1. Kernbrennstoffelement, das gesinterte Tabletten auf Basis von uranhaltigem Oxid, die von einer Metallhülle umgeben sind, und ein Mittel zum Einfangen der im Strahlungsverlauf auftretenden Spaltprodukte aufweist,
dadurch gekennzeichnet,
daß das Einfangmittel auf Basis von gemischtem Metalloxid ist, das SiO₂ und wenigstens eines der Oxide ZrO₂ oder CeO₂ aufweist, mit den Spaltprodukten eine bis über 1600 °C stabile Verbindung ergibt und in den Tabletten enthalten ist.

2. Kernbrennstoffelement, das gesinterte Tabletten auf Basis von uranhaltigem Oxid, die von einer Metallhülle umgeben sind, und ein Mittel zum Einfangen der im Strahlungsverlauf auftretenden Spaltprodukte aufweist,
dadurch gekennzeichnet,
daß das Einfangmittel auf Basis von gemischtem Metalloxid ist, das SiO₂ und wenigstens eines der Oxide ZrO₂ oder CeO₂ aufweist, mit den Spaltprodukten eine bis über 1600 °C stabile Verbindung ergibt und die Tabletten bedeckt.

3. Kernbrennstoffelement, das gesinterte Tabletten auf Basis von uranhaltigem Oxid, die von einer Metallhülle umgeben sind, und ein Mittel zum Einfangen der im Strahlungsverlauf auftretenden Spaltprodukte aufweist,
dadurch gekennzeichnet,
daß das Einfangmittel auf Basis von gemischtem Metalloxid ist, das SiO₂ und wenigstens eines der Oxide ZrO₂ oder CeO₂ aufweist, mit den Spaltprodukten eine bis über 1600 °C stabile Verbindung ergibt und die Hülle innen bedeckt.

4. Brennstoffelement nach irgendeinem der Ansprüche 1 bis 3,
dadurch gekennzeichnet,
daß die Oxide in Form einer Bestandteilsmischung oder -verbindung verwendet werden.

5. Brennstoffelement nach irgendeinem der Ansprüche 1 bis 4,
dadurch gekennzeichnet,
daß das Einfangmittel auch TiO₂ oder Nb₂O₅ enthält.

6. Brennstoffelement nach irgendeinem der Ansprüche 1 bis 5,
dadurch gekennzeichnet,
daß das Einfangmittel auch wenigstens eine stabile sauerstoffhaltige Alkali- oder Erdalkalimetallverbindung, einschließlich MgO, enthält.

7. Brennstoffelement nach irgendeinem der Ansprüche 1 bis 6,
dadurch gekennzeichnet,
daß das Einfangmittel 0,3 % bis 5 %, vorzugsweise 0,5 % bis 1 %, des Brennstoffgewichts bildet.

8. Brennstoffelement nach irgendeinem der Ansprüche 1 bis 7,
dadurch gekennzeichnet,
daß das Si/Zr-Molverhältnis im Einfangmittel im Bereich von 2 bis 3 ist.

9. Brennstoffelement nach irgendeinem der Ansprüche 1 bis 8,
dadurch gekennzeichnet,
daß im Fall des Einfangens von Cs durch ein Silicozirkonat das Cs/Zr-Molverhältnis unter 1 ist.

10. Brennstoffelement nach irgendeinem der Ansprüche 1, 4 bis 9, dadurch gekennzeichnet,
daß das Einfangmittel und seine eventuellen Zusätze dem Brennstoffoxidpulver in Form sehr feinen Pulvers zugesetzt werden, um eine sehr innige Mischung zu erhalten, die anschließend geformt und gesintert wird, um die Brennstofftablette zu erhalten.

11. Brennstoffelement nach dem Anspruch 10,
dadurch gekennzeichnet,
daß das Einfangmittel mehrere Bestandteile aufweist, die geschmolzen, homogenisiert, erstarrt und in den Zustand sehr feinen Pulvers zerkleinert werden, das dann mit dem Brennstoffoxidpulver vor der Formgebung und Sinterung zum Erhalten der Brennstofftablette vermischt wird.

## Claims

1. A nuclear fuel element comprising sintered pellets based on uraniferous oxide which are surrounded by a metal sheath, an agent trapping the fission products which appear in the course of irradiation, characterised in that the trapping agent is based on mixed metallic oxide comprising SiO₂ and one, at least, of the oxides ZrO₂ or CeO₂, gives a compound with said fission products which is stable at more than 1600°C, and is contained in the pellets.

2. A nuclear fuel element comprising sintered pellets based on uraniferous oxide which are surrounded by a metal sheath, an agent trapping the fission products which appear in the course of irradiation, characterised in that the trapping agent is based on mixed metallic oxide comprising SiO₂ and one, at least, of the oxides ZrO₂ or CeO₂, gives a compound with said fission products which is stable at more than 1600°C, and coats the pellets.

3. A nuclear fuel element comprising sintered pellets based on uraniferous oxide which are surrounded by a metal sheath, an agent trapping the fission products which appear in the course of irradiation, characterised in that the trapping agent is based on mixed metallic oxide comprising SiO₂ and one, at least, of the oxides ZrO₂ or CeO₂, gives a compound with said fission products which is stable at more than 1600°C, and internally coats the sheath.

4. A fuel element according to any one of Claims 1 to 3, characterised in that the oxides are used in the form of a mixture or a constituted compound.

5. A fuel element according to any one of Claims 1 to 4, characterised in that the trapping agent also contains TiO₂ or Nb₂O₅.

6. A fuel element according to any one of Claims 1 to 5, characterised in that the trapping agent also contains at least one stable oxygenated compound of alkali or alkaline-earth metal, including MgO.

7. A fuel element according to any one of Claims 1 to 6, characterised in that the trapping agent represents from 0.3% to 5%, preferably from 0.5% to 1%, of the weight of the fuel.

8. A fuel element according to any one of Claims 1 to 7, characterised in that the Si/Zr molar ratio in the trapping agent is between 2 and 3.

9. A fuel element according to any one of Claims 1 to 8, characterised in that in the case of trapping Cs by a silico-zirconate, the Cs/Zr molar ratio is less than 1.

10. A fuel element according to any one of Claims 1, 4 to 9, characterised in that the trapping agent and its possible additives are added in the form of a very fine powder to the powder of fuel oxide in order to obtain a very intimate mixture which is then shaped and sintered in order to produce the fuel pellet.

11. A fuel element according to Claim 10, characterised in that the trapping agent comprises a plurality of constituents which are melted, homogenised, solidified, reduced to the state of a very fine powder, then mixed with the powder of fuel oxide before being shaped and sintered to produce the fuel pellet.
